# EUROPÄISCHE PATENTSCHRIFT

(11) **EP 3 894 253 B1**
(45) Veröffentlichungstag und Bekanntmachung des Hinweises auf die Patenterteilung: **22.02.2023**
(21) Anmeldenummer: 19812727.6
(22) Anmeldetag: 21.11.2019
(51) Int. Cl.: B60K 15/05

(54) **KRAFTFAHRZEUG-KLAPPEN-SYSTEM**
MOTOR VEHICLE FLAP SYSTEM
SYSTÈME DE CLAPET POUR VÉHICULE AUTOMOBILE

(30) Priorität: 13.03.2019 DE 102019106436
(43) Veröffentlichungstag der Anmeldung: 20.10.2021
(73) Patentinhaber: HUF Hülsbeck & Fürst GmbH & Co. KG, 42551 Velbert (DE)
(72) Erfinder: BECK, Andreas, 44795 Bochum (DE); MUZZETTO, Mario, 42697 Solingen (DE); GIESEN, Anke, 42111 Wuppertal (DE)
(74) Vertreter: Zenz Patentanwälte Partnerschaft mbB
(86) Internationale Anmeldenummer: PCT/EP2019/082100
(87) Internationale Veröffentlichungsnummer: WO 2020/182326

(56) Entgegenhaltungen:
- EP-A2- 1 090 796
- EP-A2- 1 527 931
- DE-A1-102004 034 152

## Beschreibung

Die Erfindung richtet sich auf ein Kraftfahrzeug-Klappen-System, aufweisend eine Seitenwand mit einer Innenseitenfläche, einer Außenseitenfläche und einer Durchgangsöffnung, eine Klappe, welche zwischen einer die Durchgangsöffnung verschließenden Schließposition, in welcher die Klappe innerhalb der Durchgangsöffnung liegend und strakbündig mit der Außenseitenfläche verlaufend angeordnet ist, und einer die Durchgangsöffnung freigebenden Öffnungsposition bewegbar gelagert ist, und einen Betätigungshebel, welcher zwischen einer Startstellung und einer Endstellung schwenkbar gelagert ist und welcher bei seiner Bewegung in die Endstellung die Klappe in die Öffnungsposition bewegend ausgebildet ist, wobei die Klappe und der Betätigungshebel an einer an der Innenseitenfläche angeordneten Führungsachse schwenkbar gelagert sind.

Ein Kraftfahrzeug-Klappen-System der vorstehend genannten Art ist beispielsweise aus der EP 1 527 931 A2 bekannt.

Ein Kraftfahrzeug-Klappen-System ist ferner zum Beispiel aus der DE 10 2016 223 010 A1 bekannt, wobei ein Betätigungshebel zum Verschwenken einer Klappe vorgesehen ist. Der Betätigungshebel umfasst einen ersten Hebelarm und einen zweiten Hebelarm, die miteinander beweglich gekoppelt sind. Der erste Hebelarm wird von einem Antriebselement angetrieben und verschwenkt, wodurch der zweite Hebelarm ebenfalls eine Schwenkbewegung ausführt und dabei die Klappe aus einer Durchgangsöffnung nach außen bewegt. Von Nachteil ist es dabei, dass die von einer Seitenwand des Kraftfahrzeugs nach außen vorstehende Klappe ein Hindernis darstellt, an dem eine Person beispielsweise mit ihrer Kleidung hängen bleiben kann. Unter Umständen kann die Klappe verbogen oder sogar abgebrochen werden.

Der Erfindung liegt die Aufgabe zugrunde, ein Kraftfahrzeug-Klappen-System der eingangs genannten Art bereitzustellen, bei dem die genannten Nachteile nicht auftreten.

Diese Aufgabe wird durch ein Kraftfahrzeug-Klappen-System gelöst, welches eine Seitenwand mit einer Innenseitenfläche, einer Außenseitenfläche und einer Durchgangsöffnung, eine Klappe, welche zwischen einer die Durchgangsöffnung verschließenden Schließposition, in welcher die Klappe innerhalb der Durchgangsöffnung liegend und strakbündig mit der Außenseitenfläche verlaufend angeordnet ist, und einer die Durchgangsöffnung freigebenden Öffnungsposition an der Innenseitenfläche bewegbar gelagert ist, und einen Betätigungshebel aufweist. Erfindungsgemäß ist die Klappe somit in der Öffnungsposition an der Innenseitenfläche und somit innenseitig angeordnet und steht nicht wie im Stand der Technik nach außen hervor. Der Betätigungshebel ist zwischen einer Startstellung und einer Endstellung an der Innenseitenfläche schwenkbar gelagert, wobei der Betätigungshebel ferner bei seiner Bewegung in die Endstellung die Klappe in die Öffnungsposition bewegend ausgebildet ist. Ferner sind die Klappe und der Betätigungshebel an einer an der Innenseitenfläche angeordneten Führungsachse schwenkbar gelagert. An der Innenseitenfläche ist eine Bewegungsführung ausgebildet, in welcher ein an der Klappe ausgebildeter Bewegungszapfen geführt angeordnet ist,

Vorteilhafte und zweckmäßige Ausgestaltungen und Weiterbildungen der Erfindung ergeben sich aus den Unteransprüchen.

Durch die Erfindung wird ein Kraftfahrzeug-Klappen-System zur Verfügung gestellt, welches sich durch eine einfache Konstruktion und durch ein besonderes Konzept zur Bewegung der Klappe aus einer Schließposition in eine Öffnungsposition auszeichnet. Die Klappe wird erfindungsgemäß nach Art einer Schiebetür unter die Seitenwand entlang der Innenseitenfläche bewegt und ist damit gegenüber der Außenseite der Seitenwand innenseitig der Seitenwand geschützt angeordnet, wenn die Klappe in ihre Öffnungsposition bewegt wird. Darüber hinaus ist in vorteilhafter Weise auch der zur Bewegung der Klappe erforderliche Betätigungshebel geschützt innenseitig der Seitenwand angeordnet. Dadurch, dass die Klappe und der Betätigungshebel an der an der Innenseitenfläche angeordneten Führungsachse schwenkbar gelagert sind, wird die Führungsachse als einziges Bauteil zur Lagerung der Bewegung von zwei Bauteilen genutzt, was nicht nur Bauteile einspart, sondern auch den erforderlichen Bauraum minimiert. Dabei unterstützt die Bewegungsführung die Bewegungsführung der Klappe aus der Schließposition in die Öffnungsposition.

Im Hinblick auf eine weitere Minimierung des Bauraums und Erhöhung der Flexibilität des Kraftfahrzeug-Klappen-Systems sieht die Erfindung in Ausgestaltung vor, dass die Klappe entlang der Führungsachse in eine axiale Richtung bewegbar gelagert ist. Folglich kann die Klappe nicht nur eine Schwenkbewegung um die Führungsachse ausführen, sondern die Klappe kann auch in eine Richtung zu dem Betätigungshebel hin oder von diesem weg und damit aus der Durchgangsöffnung heraus bewegt werden, denn die Führungsachse ist senkrecht zu der Durchgangsöffnung ausgerichtet.

Konstruktiv besonders günstig ist es in Ausgestaltung der Erfindung, wenn an dem Betätigungshebel oder an der Klappe ein Federelement gelagert ist, welches eine die Klappe in Richtung des Betätigungshebels drängende Kraft auf die Klappe ausübt. Durch die Federvorspannung des Federelements wirkt auf die Klappe eine Kraft, welche die Klappe in Richtung des Betätigungshebels drängt, was eine Öffnungsbewegung der Klappe begünstigt.

Die Federvorspannung wirkt sich besonders günstig darauf aus, wenn in Ausgestaltung des erfindungsgemäßen Kraftfahrzeug-Klappen-Systems an der Klappe eine Bewegungskontur ausgebildet ist, die an einem an dem Betätigungshebel ausgebildeten Bewegungsansatz anliegt. Somit drückt das Federelement die Bewegungskontur gegen den Bewegungsansatz.

Eine besonders günstige Möglichkeit zur Realisierung einer geführten Bewegung besteht in Ausgestaltung der Erfindung darin, dass die Bewegungskontur einen Neutralabschnitt, an welchem der Bewegungsansatz in seiner Startposition die Klappe in ihre Schließposition drängend anliegt, und einen Eingriffsabschnitt, mit welchem der Bewegungsansatz bei der Bewegung des Betätigungshebels in Richtung seiner Endstellung in Eingriff steht, aufweist.

Damit die Bewegung der Klappe nicht sprungartig erfolgt, ist in Ausgestaltung der Erfindung ferner vorgesehen, dass der Eingriffsabschnitt eine von dem Neutralabschnitt bis zu einem Fußpunkt schräg verlaufende Einfahrflanke und eine Antriebsflanke umfasst, wobei bei einer Bewegung des Betätigungshebels in Richtung seiner Endstellung der Bewegungsansatz an der Antriebsflanke die Klappe in ihre Öffnungsstellung drängend anliegt bzw. ausgebildet ist.

Erfindungsgemäß führt der Betätigungshebel die Bewegung der Klappe. Zu diesem Zweck ist es in Ausgestaltung der Erfindung von Vorteil, wenn der Bewegungsansatz eine komplementär zu der schräg verlaufenden Einfahrflanke ausgebildete Eingriffsfläche aufweist, die auf der schräg verlaufenden Einfahrflanke des Eingriffsabschnitts aufliegt, wenn der Eingriffsabschnitt und der Bewegungsansatz in Eingriff stehen.

Zur Reduzierung des Reibungswiderstandes und von unerwünschten Geräuschen während der Bewegung des Bewegungsansatzes entlang der Bewegungskontur sieht die Erfindung in Ausgestaltung vor, dass der Bewegungsansatz ein Rollenelement drehbar lagert, wobei der Bewegungsansatz über das Rollenelement an der Bewegungskontur anliegt.

Die Erfindung sieht weiter vor, dass der Betätigungshebel und die Klappe um die Führungsachse gemeinsam schwenkbar sind, wenn der Eingriffsabschnitt und der Bewegungsansatz in Eingriff stehen. Andererseits ist die Klappe von dem Betätigungshebel entkoppelt, wenn kein Eingriff zwischen dem Bewegungsansatz und dem Eingriffsabschnitt vorliegt.

Die Federvorspannung des Federelements führt in Ausgestaltung der Erfindung dazu, dass bei einer Bewegung des Betätigungshebels in Richtung seiner Endstellung das Federelement eine den Eingriffsabschnitt auf den Bewegungsansatz drängende Kraft ausübt.

Um eine translatorische Bewegung der Klappe aus der Durchgangsöffnung heraus entlang der Führungsachse zu realisieren und dabei eine Schwenkbewegung der Klappe zu verhindern, ist in Ausgestaltung der Erfindung weiter vorgesehen, dass an der Innenseitenfläche zwei Führungsstege ausgebildet sind, wobei die Klappe einen Klappenhebel aufweist, der mit einem ersten Längsende an der Führungsachse gelagert ist und der an einem zweiten Längsende die Klappe trägt, wobei der Klappenhebel in der Schließstellung der Klappe zwischen den zwei Führungsstegen liegend angeordnet ist und die zwei Führungsstege in Schließstellung der Klappe eine Schwenkbewegung des Klappenhebels um die Führungsachse blockieren.

Dementsprechend ist es von Vorteil, dass in Ausgestaltung der Erfindung der Klappenhebel entlang der Führungsachse in Richtung des Betätigungshebels außerhalb der zwei Führungsstege liegend angeordnet ist, wenn der Eingriffsabschnitt und der Bewegungsansatz in Eingriff stehen.

Sollte die Klappe innerhalb der Durchgangsöffnung festsitzen, was beispielsweise bei Vereisung oder infolge von Verschmutzungen der Fall sein kann, so bietet die Erfindung in weiterer Ausgestaltung die Möglichkeit des Lösens der Klappe, indem die Bewegungskontur zwischen dem Neutralabschnitt und dem Eingriffsabschnitt einen sich von dem Neutralabschnitt erhebenden Ausstellabschnitt aufweist, wobei die Klappe in einer aus der Durchgangsöffnung und aus der Außenseitenfläche hervorstehenden Ausstellposition, in welcher die Klappe in einem größeren Abstand zu dem Betätigungshebel angeordnet ist als in der Schließposition, angeordnet ist, und wobei in der Ausstellposition der Klappe der Bewegungsansatz an dem Ausstellabschnitt die Klappe in die Ausstellposition drängend anliegt. Die Klappe wird folglich bei ihrer Öffnungsbewegung gemäß dieser vorteilhaften Ausgestaltung zunächst aus der Durchgangsöffnung nach außen bewegt, bevor die eigentliche Öffnungsbewegung nach innen gerichtet auf der Seite der Innenseitenfläche erfolgt.

Für eine alternative Bewegungsführung der Klappe sieht die Erfindung in Ausgestaltung vor, dass eine Kulissenführung an der Klappe ausgebildet ist, in welcher ein an dem Betätigungshebel ausgebildeter Bewegungszapfen angeordnet ist, welcher die Klappe aus der Schließposition in die Öffnungsposition drängend ausgebildet ist, wobei die Kulissenführung eine Bewegung der Klappe in eine zu dem Betätigungshebel hin und von dem Betätigungshebel weg gerichtete Richtung führend ausgebildet ist. Damit ist die Bewegung der Klappe zwangsgeführt, wobei die Klappe und der Betätigungshebel jederzeit miteinander gekoppelt sind.

Schließlich ist in Ausgestaltung der Erfindung vorgesehen, dass ein Antriebselement mit dem Betätigungshebel antriebsverbunden ist und den Betätigungshebel aus der Startstellung in die Endstellung und zurück in die Startstellung bewegend ausgebildet ist. Der Betätigungshebel ist folglich motorisch angetrieben.

Um die von dem Antriebselement aufzubringende Kraft zur Bewegung des Betätigungshebels und der mit dem Betätigungshebel gekoppelten Klappe gering zu halten, sieht die Erfindung in Ausgestaltung vor, dass das Antriebselement einen Antriebshebel mit einem Antriebszapfen antreibt, wobei der Betätigungshebel ein Langloch aufweist, in welchem der Antriebszapfen angeordnet ist, und wobei das Antriebselement über den Antriebshebel und den in dem Langloch angeordneten Antriebszapfen mit dem Betätigungshebel antriebsverbunden ist.

Es versteht sich, dass die vorstehend genannten und nachstehenden noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der ein beispielhaftes und bevorzugtes Ausführungsbeispiel der Erfindung dargestellt ist.

In der Zeichnung zeigt:
Figur 1 eine schematische Seitenansicht eines Kraftfahrzeugs mit einer eine Durchgangsöffnung verschließenden Klappe,
Figur 2 eine perspektivische Ansicht auf eine Außenseitenfläche einer Seitenwand des Kraftfahrzeugs mit der in einer Schließposition angeordneten Klappe,
Figur 3 eine perspektivische Ansicht auf die Außenseitenfläche der Seitenwand des Kraftfahrzeugs mit der in einer Öffnungsposition angeordneten Klappe,
Figur 4 eine perspektivische Ansicht auf die Außenseitenfläche der Seitenwand des Kraftfahrzeugs mit einem durch die Durchgangsöffnung hindurchgesteckten Ladestecker,
Figur 5 eine perspektivische Ansicht auf eine Innenseitenfläche der Seitenwand des Kraftfahrzeugs,
Figur 6 eine vergrößerte Ansicht auf die Innenseitenfläche der Seitenwand mit der in der Schließposition angeordneten Klappe,
Figur 7 eine vergrößerte Ansicht auf die Innenseitenfläche der Seitenwand mit der in der Öffnungsposition angeordneten Klappe,
Figur 8 eine Perspektivansicht auf das Kraftfahrzeug-Klappen-System ohne die Seitenwand,
Figur 9 eine perspektivische Einzelteildarstellung des Kraftfahrzeug-Klappen-Systems aus Figur 8,
Figur 10 eine perspektivische Darstellung der Klappe,
Figur 11 eine Perspektivansicht eines Betätigungshebels des Kraftfahrzeug-Klappen-Systems,
Figur 12 eine Seitenansicht auf das Kraftfahrzeug-Klappen-System mit der in der Schließposition angeordneten Klappe,
Figur 13 eine Seitenansicht auf das Kraftfahrzeug-Klappen-System mit der in der Öffnungsposition angeordneten Klappe,
Figur 14 eine Draufsicht auf das Kraftfahrzeug-Klappen-System mit der in der Schließposition angeordneten Klappe,
Figur 15 eine Draufsicht auf das Kraftfahrzeug-Klappen-System mit der in der Öffnungsposition angeordneten Klappe,
Figur 16 eine Perspektivansicht auf die Außenseitenfläche der Seitenwand mit der in der Schließposition angeordneten Klappe,
Figur 17 eine Perspektivansicht auf die Außenseitenfläche der Seitenwand mit der in der Öffnungsposition angeordneten Klappe,
Figur 18 eine Seitenansicht auf das Kraftfahrzeug-Klappen-System mit der in einer Ausstellposition angeordneten Klappe,
Figur 19 eine Draufsicht auf das Kraftfahrzeug-Klappen-System mit der in der Ausstellposition angeordneten Klappe,
Figur 20 eine perspektivische Ansicht auf besonders ausgeführte Bewegungsansätze des Betätigungshebels für das Kraftfahrzeug-Klappen-System,
Figur 21 eine Detailansicht der Figur 20 auf einen der besonders ausgeführten Bewegungsansätze,
Figur 22 eine Detailansicht auf den besonders ausgeführten Bewegungsansatz bei in der Schließposition angeordneter Klappe,
Figur 23 eine Detailansicht auf den besonders ausgeführten Bewegungsansatz bei in der Ausstellposition angeordneter Klappe, und
Figur 24 eine Detailansicht auf den besonders ausgeführten Bewegungsansatz bei in der Öffnungsposition angeordneter Klappe.

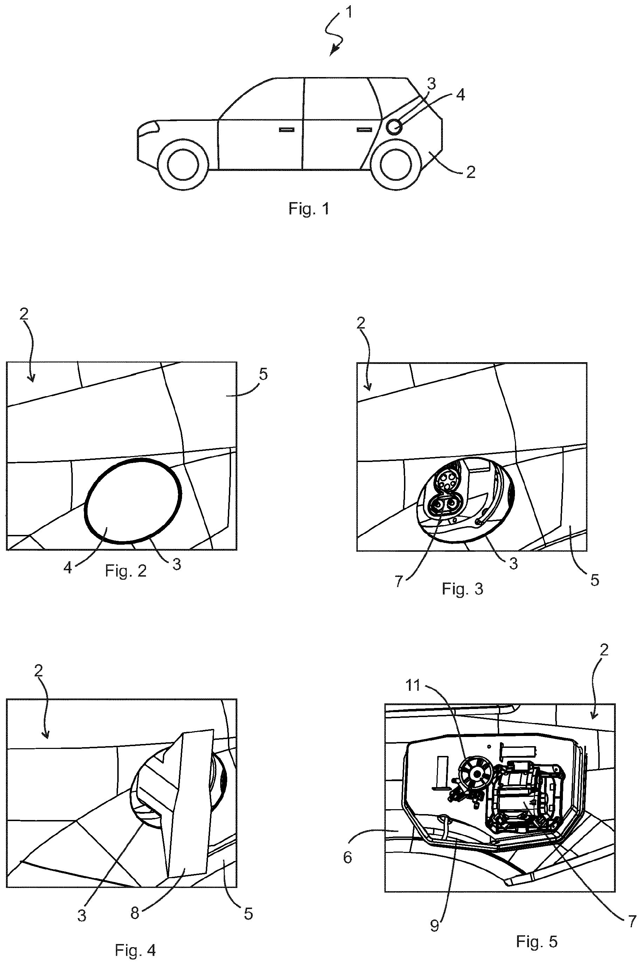

In der Figur 1 ist ein Kraftfahrzeug 1 gezeigt. Das Kraftfahrzeug 1 weist in einer Seitenwand 2 eine Durchgangsöffnung 3 auf, die von einer Klappe 4 verschlossen ist. Die Klappe 4 kann eine Tankmulde für ein herkömmliches Fahrzeug oder eine Ladesteckdose für ein Elektro- oder Hybridfahrzeug verschließen, wobei es im Sinne der Erfindung auch denkbar ist, dass es sich um eine Klappe handelt, die eine Kameraeinheit in ihrer Ruhestellung schützt. Das in den Figuren gezeigte Ausführungsbeispiel richtet sich somit nur beispielhaft auf eine Klappe, die eine Ladesteckdose für ein Elektro- oder Hybridfahrzeug verdeckt. In den Figuren 2 bis 4 ist lediglich die Seitenwand 2 des Kraftfahrzeugs 1 dargestellt, wobei in Figur 2 eine Außenseitenfläche5 der Seitenwand 2 gezeigt ist und die Klappe 4 in einer Schließposition angeordnet ist. In der Schließposition ist die Klappe 4 innerhalb der Durchgangsöffnung 3 angeordnet und verschließt die Durchgangsöffnung 3, wobei die Klappe 4 strakbündig mit der Außenseitenfläche 5 verlaufend angeordnet ist. Die Figur 3 zeigt ebenfalls die Außenseitenfläche 5 der Seitenwand 2 des Kraftfahrzeugs 1, wobei die Klappe 4 nun aus der Durchgangsöffnung 3 herausbewegt und in einer Öffnungsposition angeordnet ist. In der Öffnungsposition ist die Klappe 4 an einer Innenseitenfläche 6 der Seitenwand 2 gelagert, so dass die Klappe 4 in Figur 3 hinter der Seitenwand 2 angeordnet ist und die Durchgangsöffnung 3 freigibt, so dass von außen ein Zugang durch die Durchgangsöffnung 3 hindurch auf eine Ladesteckdose 7 gegeben ist. Dieser Zugang von außen kann dazu genutzt werden, um einen Ladestecker 8 in die Ladesteckdose 7 zu stecken und einen Aufladungsvorgang für eine Fahrzeugbatterie eines Elektro- oder Hybridfahrzeugs durchzuführen, wie es in Figur 4 exemplarisch gezeigt ist. Die Figur 5 zeigt eine Ansicht auf die Innenseitenfläche 6 der Seitenwand 2 des Kraftfahrzeugs 1, wobei in der Figur 5 ein Trägergehäuse 9 zu erkennen ist, welches an der Innenseitenfläche 6 der Seitenwand 2 befestigt ist und in welchem die Klappe 4 bewegbar angeordnet ist. Dabei gehört die Klappe 4 zu einem erfindungsgemäßen Kraftfahrzeug-Klappen-System 10, dessen Bauteile ebenfalls innerhalb des Trägergehäuses 9 untergebracht und gelagert sind, so dass sie in Figur 5 von dem Trägergehäuse 9 verdeckt und daher nicht zu erkennen sind. Zu erkennen ist in Figur 5 die Ladesteckdose 7 und ein Klappen-Notbetätigungshebel 11, welcher in einem Notbetrieb zur Öffnung der Klappe 4 verwendet werden kann und welcher zu diesem Zweck mit dem Kraftfahrzeug-Klappen-System 10 gekoppelt ist.

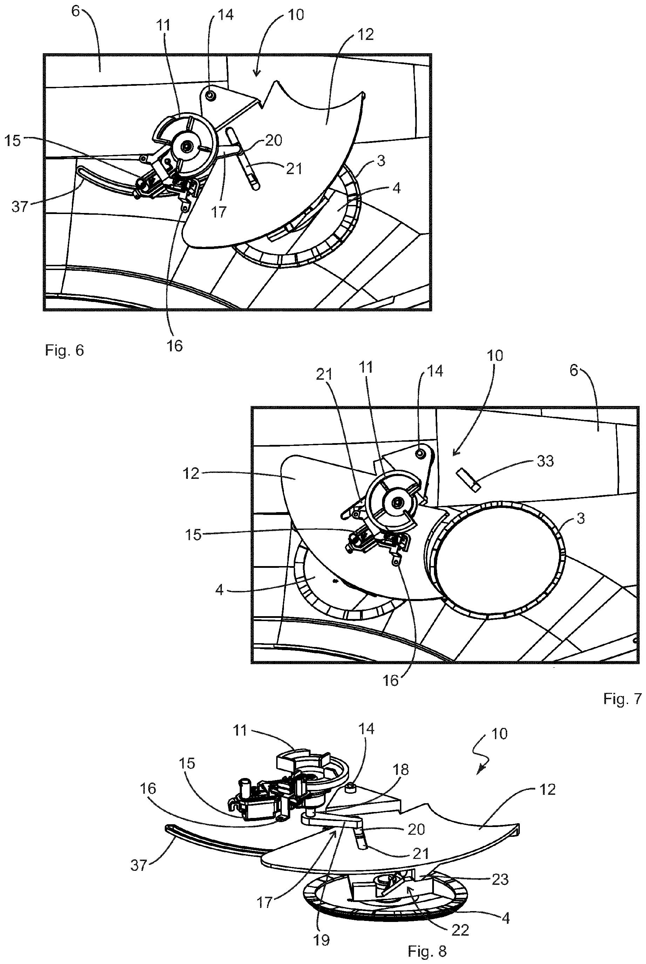

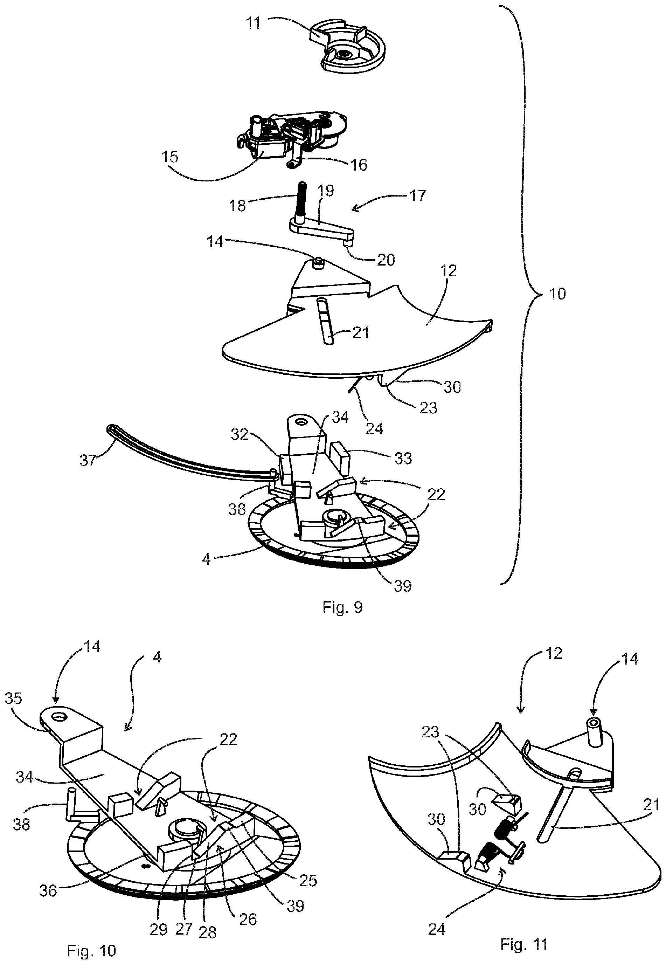

Die Figur 6 zeigt eine vergrößerte Ansicht auf die Innenseitenfläche 6 der Seitenwand 2 des Kraftfahrzeugs 1 mit der in Schließposition angeordneten Klappe 4, wobei das Trägergehäuse 9 nicht dargestellt ist, so dass der Klappen-Notbetätigungshebel 11 und das Kraftfahrzeug-Klappen-System 10, welches nachstehend im Detail beschrieben wird, zu erkennen sind. Figur 7 zeigt ebenfalls eine vergrößerte Ansicht auf die Innenseitenfläche 6 der Seitenwand 2 des Kraftfahrzeugs 1, wobei die Klappe 4 hierbei in der Öffnungsposition angeordnet ist und die Durchgangsöffnung 3 freigibt. Das erfindungsgemäße Kraftfahrzeug-Klappen-System 10 ist in Figur 8 und in einer Einzelteildarstellung in Figur 9 gezeigt, wobei Figur 10 die Klappe 4 und Figur 11 einen Betätigungshebel 12 des Kraftfahrzeug-Klappen-Systems 10 zeigen. Wie aus der Zusammenschau der Figuren 6 und 7 hervorgeht, ist die Klappe 4 zwischen der Schließposition (siehe Figur 6) und der die Durchgangsöffnung 3 freigebenden Öffnungsposition (siehe Figur 7) an der Innenseitenfläche 6 der Seitenwand 2 bewegbar gelagert. Die Bewegung der Klappe 4 wird dabei von dem Betätigungshebel 12 realisiert, wobei der Betätigungshebel 12 zu diesem Zweck zwischen einer Startstellung (siehe Figuren 6, 12 und 14), in welcher die Klappe 4 in der Schließposition angeordnet ist, und einer Endstellung (siehe Figuren 7, 13 und 15), in welcher die Klappe in der Öffnungsposition angeordnet ist, an der Innenseitenfläche 6 schwenkbar gelagert ist. Bei seiner Bewegung in die Endstellung bewegt der Betätigungshebel 12 die Klappe 4 in die Öffnungsposition, wobei auf die konstruktiven Details der Ausbildung nachstehend eingegangen wird.

In Zusammenschau der Figuren 6 bis 15 ist zu erkennen, dass das Kraftfahrzeug-Klappen-System 10 eine Führungsachse 14 aufweist, welche an der Innenseitenfläche 6 angeordnet ist. Dabei kann die Führungsachse 14 direkt an der Innenseitenfläche 6 angebracht sein. In jedem Fall ist die Führungsachse 14 von dem Trägergehäuse 9 abgedeckt. An der Führungsachse 14 sind sowohl der Betätigungshebel 12 als auch die Klappe 4 schwenkbar gelagert, wobei die Klappe 4 zwischen dem Betätigungshebel 12 und der Innenseitenfläche 6 der Seitenwand 2 angeordnet ist, wenn die Klappe 4 außerhalb der Durchgangsöffnung 3 der Seitenwand 2 angeordnet ist. Ein Antriebselement 15 ist über einen Träger 16 an der Innenseitenfläche 6 der Seitenwand 2 befestigt. Das Antriebselement 15 ist mit dem Betätigungshebel 12 antriebsverbunden, wobei die Antriebsverbindung von einem Antriebshebel 17 hergestellt ist, welcher das Antriebselement 15 mit dem Betätigungshebel 12 verbindet. Genauer gesagt weist der Antriebshebel 17 eine Antriebswelle 18 auf, die von dem Antriebselement 15 drehend angetrieben wird, wobei von der Antriebswelle 18 ein Hebelarm 19 abragt, wie es beispielsweise aus Figur 9 ersichtlich ist. Der Hebelarm 19 weist ein freies Ende 20 auf, an welchem ein Antriebszapfen 20 ausgebildet ist. Dieser Antriebszapfen 20 ist in einem Langloch 21 angeordnet, welches in dem Betätigungshebel 12 ausgebildet ist. Wenn das Antriebselement 15 nun den Antriebshebel 17 antreibt, dann drückt der Antriebszapfen 20 gegen den Rand des Langlochs 21 und verschwenkt dadurch den Betätigungshebel 12 um die Führungsachse 14. Folglich ist das Antriebselement 15 über den Antriebshebel 17 und den in dem Langloch 21 angeordneten Antriebszapfen 20 mit dem Betätigungshebel 12 antriebsverbunden (siehe zum Beispiel Figur 8), so dass das Antriebselement 15 den Betätigungshebel 12 aus der Startstellung in die Endstellung und zurück in die Startstellung bewegen kann, wobei bei dieser Bewegung der Betätigungshebel 12 um die Führungsachse 14 schwenkt.

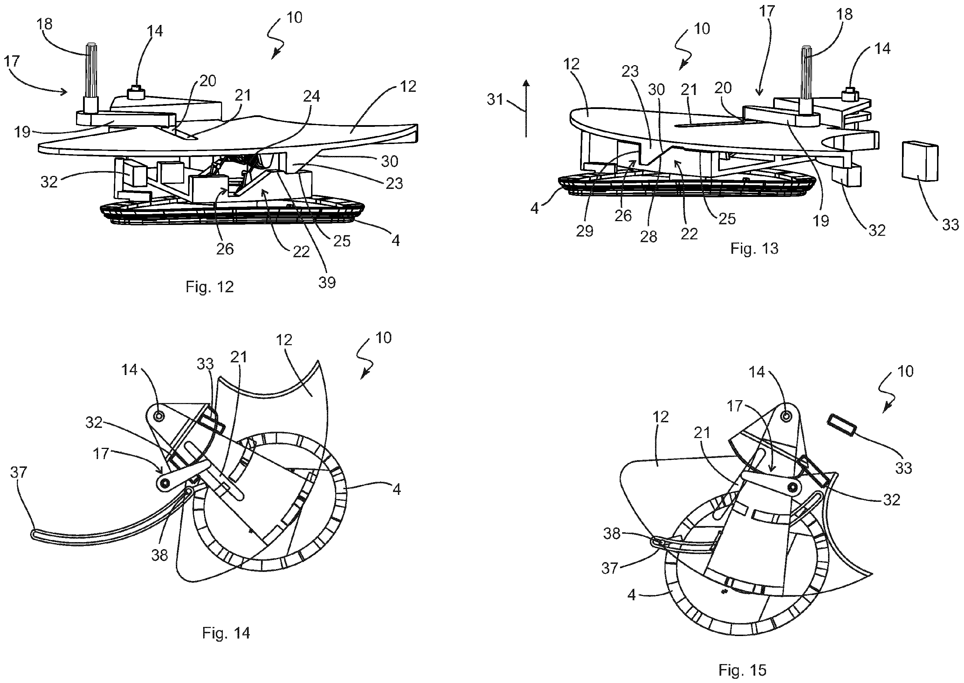

Damit der Betätigungshebel 12 bei seiner Bewegung in Richtung der Endstellung die Klappe 4 in die Öffnungsposition bewegen kann, ist an der Klappe 4 eine Bewegungskontur 22 ausgebildet, die mit einem an dem Betätigungshebel 12 ausgebildeten Bewegungsansatz 23 zusammenwirkt. Für das Zusammenwirken ist ein Federelement 24 (siehe zum Beispiel Figur 11) verantwortlich, welches in dem gezeigten Ausführungsbeispiel an dem Betätigungshebel 12 gelagert ist, wobei alternativ das Federelement auch an der Klappe 4 gelagert sein könnte. Wichtig ist dabei lediglich, dass das Federelement 24 eine die Klappe 4 in Richtung des Betätigungshebels 12 drängende Kraft auf die Klappe 4 ausübt, so dass das Federelement 24 die Bewegungskontur 22 dauerhaft gegen den an dem Betätigungshebel 12 ausgebildeten Bewegungsansatz 23 drückt und die Bewegungskontur 22 an dem Bewegungsansatz 23 anliegt. Wie insbesondere die Figuren 9 bis 11 zeigen, sind bei dem gezeigten Ausführungsbeispiel zwei Bewegungsansätze 23 vorgesehen, die auf unterschiedlichen Radien mit Bezug auf die Führungsachse 14 angeordnet und ausgebildet sind, wobei in der Figur 11 die Lage der Führungsachse 14 durch den Pfeil kenntlich gemacht ist. Ebenso verhält es sich mit der Bewegungskontur 22, welche zweifach an der Klappe 4 jedoch auf unterschiedlichen Radien mit Bezug auf die Führungsachse 14 ausgebildet und angeordnet sind. Dabei sind die jeweiligen radialen Abstände für die Bewegungskonturen 22 und die Bewegungsansätze 23 identisch, um die vorstehend beschriebene Anordnung der auf den Bewegungsansätzen 23 aufliegenden und dagegen drückenden Bewegungskonturen 22 erfüllen zu können. Eine jeweilige Bewegungskontur 22 weist einen Neutralabschnitt 25 und einen Eingriffsabschnitt 26 auf, wobei der Bewegungsansatz 23 in seiner Startposition an dem Neutralabschnitt 25 anliegt und die Klappe 4 in ihre Schließposition drängt, wie es in den Figuren 12 und 14 gezeigt ist, wobei in Figur 14 der Betätigungshebel 12 durchsichtig dargestellt ist, um die darunter liegend angeordnete Klappe 4 erkennen zu können. Mit dem Eingriffsabschnitt 26 der jeweiligen Bewegungskontur 22 stehen die zugeordneten Bewegungsansätze 23 bei der Bewegung des Betätigungshebels 12 in Richtung seiner Endstellung in Eingriff, was in den Figuren 13 und 15 gezeigt ist, in denen der Betätigungshebel 12 in seiner Endstellung und die Klappe 4 in ihrer Öffnungsposition angeordnet sind, wobei in Figur 15 der Betätigungshebel 12 ebenfalls durchsichtig dargestellt ist, um die darunter liegend angeordnete Klappe 4 erkennen zu können. Es versteht sich, dass anstelle von zwei Bewegungskonturen 22 und von zwei Bewegungsansätzen 23 auch nur eine einzige Bewegungskontur 22 und ein einziger Bewegungsansatz 23 vorgesehen sein kann. Der Eingriffsabschnitt 26 ist trapezförmig ausgebildet und umfasst eine von dem Neutralabschnitt 25 bis zu einem Fußpunkt 27 schräg verlaufende Einfahrflanke 28 und eine Antriebsflanke 29, wie es beispielsweise aus Figur 10 ersichtlich ist. Entsprechend ist bei einer Bewegung des Betätigungshebels 12 in Richtung seiner Endstellung der Bewegungsansatz 23 an der Antriebsflanke 29 die Klappe 4 in ihre Öffnungsstellung drängend ausgebildet, wie es zum Beispiel aus Figur 13 ersichtlich ist. Hierzu ist der Bewegungsansatz 23 ebenfalls trapezförmig ausgebildet und weist eine komplementär zu der schräg verlaufenden Einfahrflanke 28 ausgebildete Eingriffsfläche 30 auf, die auf der schräg verlaufenden Einfahrflanke 28 des Eingriffsabschnitts 26 aufliegt, wenn der Eingriffsabschnitt 26 und der Bewegungsansatz 23 in Eingriff stehen. Infolge der Kraft des Federelements 24 wird der Eingriffsabschnitt 26 auf den Bewegungsansatz 23 gedrückt, wenn das Antriebselement 15 den Betätigungshebel 12 aus der Startstellung in die Endstellung bewegt, wobei dann die Klappe 4 eine Bewegung entlang der Führungsachse 14 in eine axiale Richtung 31 (siehe zum Beispiel Figur 13) erfährt, so dass sich die Klappe 4 infolge der Kraft des Federelements 24 aus der Durchgangsöffnung 3 heraus und in Richtung des Betätigungshebels 12 bewegt. Somit ist die Klappe 4 entlang der Führungsachse 14 in axialer Richtung 31 bewegbar gelagert, wobei die Klappe 4 ferner um die Führungsachse 14 schwenkbar gelagert ist. Dabei ist die Führungsachse 14 senkrecht zu der Durchgangsöffnung 3 ausgerichtet. Wenn der Eingriffsabschnitt 26 und der Bewegungsansatz 23 in Eingriff stehen, dann schwenken der Betätigungshebel 12 und die Klappe 4 gemeinsam um die Führungsachse 14. Bei der Bewegung des Betätigungshebels 12 in Richtung seiner Endstellung übt das Federelement 24 eine den Eingriffsabschnitt 26 auf den Bewegungsansatz 23 drängende Kraft aus (siehe zum Beispiel Figur 13). Andererseits ist die Klappe 4 von dem Betätigungshebel 12 entkoppelt, wenn kein Eingriff zwischen dem Bewegungsansatz 23 und dem Eingriffsabschnitt 26 vorliegt.

Um eine Beschädigung der Durchgangsöffnung 3 zu vermeiden, ist erfindungsgemäß vorgesehen, dass sich die Klappe 4 bei einer Bewegung aus der Schließposition heraus nur entlang der Führungsachse 14 in axialer Richtung 31 bewegen kann. Dazu sind an der Innenseitenfläche 6 zwei Führungsstege 32 und 33 ausgebildet. Ferner weist die Klappe 4 einen Klappenhebel 34 auf, der einstückig mit der Klappe 4 ausgebildet sein kann. Der Klappenhebel 34 ist mit einem ersten Längsende 35 an der Führungsachse 14 gelagert, so dass folglich die Klappe 4 über den Klappenhebel 34 schwenkbar an der Führungsachse 14 gelagert ist. An einem zweiten Längsende 36 trägt der Klappenhebel 34 dann die Klappe 4, mit welcher die Durchgangsöffnung 3 verschlossen werden kann. Der Klappenhebel 34 ist in der Schließstellung der Klappe 4 zwischen den zwei Führungsstegen 32, 33 liegend angeordnet (siehe zum Beispiel Figur 14), wobei die zwei Führungsstege 32, 33 in Schließstellung der Klappe 4 eine Schwenkbewegung des Klappenhebels 34 um die Führungsachse 14 herum blockieren. Wie ferner der Figur 14 zu entnehmen ist, ist der Klappenhebel 34 entlang der Führungsachse 14 in Richtung des Betätigungshebels 12 außerhalb der zwei Führungsstege 32, 33 liegend angeordnet, wenn der Eingriffsabschnitt 26 und der Bewegungsansatz 23 in Eingriff stehen. Die Figuren 14 und 15 zeigen darüber hinaus, dass an der Innenseitenfläche 6 eine Bewegungsführung 37 ausgebildet ist, die ein Langloch aufweist, in welchem ein an der Klappe 4 ausgebildeter Bewegungszapfen 38 geführt angeordnet ist.

Mit Bezug auf die Figuren 12 bis 15 wird nachstehend die Funktionsweise des erfindungsgemäßen Kraftfahrzeug-Klappen-Systems 10 beschrieben. In den Figuren 12 und 14 ist die Klappe 4 in der Schließposition angeordnet, wohingegen der Betätigungshebel 12 in seiner Startstellung angeordnet ist. In dieser Anordnung drückt das Federelement 24 der Neutralabschnitt 25 gegen den Bewegungsansatz 23, so dass die Klappe 4 in der Durchgangsöffnung 3 liegend angeordnet ist und diese verschließt. Wird nun das Antriebselement 15 in Betrieb genommen, um die Durchgangsöffnung 3 freizugeben, so bewegt das Antriebselement 15 den Antriebshebel 17, welcher wiederum über seinen Antriebszapfen 20 mit dem Betätigungshebel 12 antriebsverbunden ist. Das Antriebselement 15 schwenkt damit über den Antriebshebel 17 den Betätigungshebel 12 um die Führungsachse 14, so dass der Bewegungsansatz 23 entlang des Neutralabschnitts 25 der Klappe 4 in Richtung des Eingriffsabschnitts 26 gleitet. Wenn dann der Bewegungsansatz 23 an dem Eingriffsabschnitt 26 angelangt ist, drückt das Federelement 24 die Klappe 4 in Richtung des Betätigungshebels 12, wobei die Klappe 4 aufgrund der Führungsstege 32, 33 sich nur in axialer Richtung 31 entlang der Führungsachse 14 bewegen kann. Dabei drückt das Federelement 24 den Eingriffsabschnitt 26 auf den Bewegungsansatz 23, wobei die Klappe 4 dann ferner nach ihrer axialen Bewegung entlang der Führungsachse 14 außerhalb der Führungsstege 32, 33 angeordnet ist und mit dem Betätigungshebel 12 mit um die Führungsachse 14 schwenkt, denn der Eingriffsabschnitt 26 steht in Eingriff mit dem Bewegungsansatz 23. Dementsprechend bewegt dann der Betätigungshebel 12 die Klappe 4 mit, bis der Betätigungshebel 12 in seiner Endstellung angeordnet ist, in welcher die Klappe 4 in ihrer Öffnungsstellung angeordnet ist, wie es in den Figuren 13 und 15 gezeigt ist. Das Verschließen der Durchgangsöffnung 3 erfolgt dann in umgekehrter Reihenfolge, wobei der Betätigungshebel 12 die Klappe 4 solange in Richtung der Schließposition mitbewegt, bis der Klappenhebel 34 an dem Führungssteg 33 anliegt. Ab dann drückt der Bewegungsansatz 23 die Klappe 4 in Richtung der Durchgangsöffnung 3 entlang der Führungsachse 14, indem der Betätigungshebel 12 weiter um die Führungsachse 14 schwenkt und dabei den Bewegungsansatz 23 entlang der Einfahrflanke 28 bis zum Neutralabschnitt 25 bewegt. Dadurch, dass der Klappenhebel 34 an dem Führungssteg 33 anliegt, gleitet der Bewegungsansatz 23 des Betätigungshebels 12 entlang der Bewegungskontur 22 der Klappe 4.

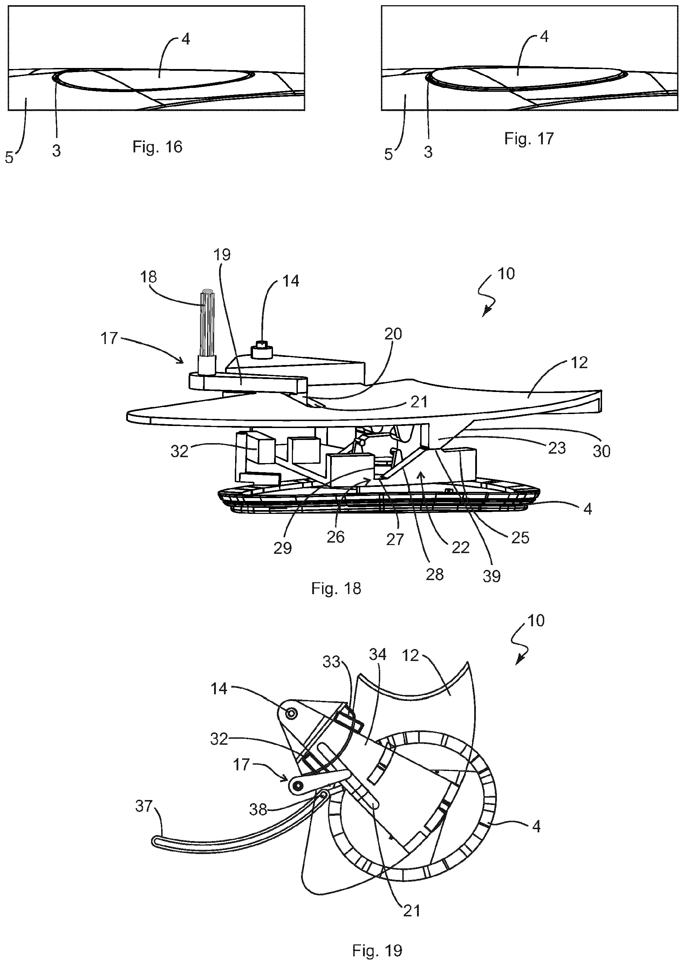

In den Figuren 16 bis 19 ist eine Erweiterung für das vorstehend beschriebene Kraftfahrzeug-Klappen-System 10 gezeigt. Bei dieser Erweiterung handelt es sich um eine Funktionalität für einen Fall, bei welchem die Kraft des Federelements 24 nicht ausreichen würde, um die Klappe 4 aus ihrer Schließposition in entlang der Führungsachse 14 in Richtung des Betätigungshebels 12 zu bewegen. Solch ein Fall kann beispielsweise dann vorliegen, wenn sich die Klappe 4 aufgrund von Vereisung im Winter nicht aus der Schließposition herausbewegt. Um die Klappe 4 loszubrechen bzw. wieder beweglich zu bekommen, weist die Bewegungskontur 22 zwischen dem Neutralabschnitt 25 und dem Eingriffsabschnitt 26 einen sich von dem Neutralabschnitt 25 in Richtung des Betätigungshebels 12 erstreckenden Ausstellabschnitt 39 auf (siehe zum Beispiel Figur 18). Dieser Ausstellabschnitt 39 sorgt bei einer Bewegung des Bewegungsansatzes 23 entlang der Bewegungskontur 22 dafür, dass die Klappe 4 in einer aus der Durchgangsöffnung 3 und aus der Außenseitenfläche 5 hervorstehenden Ausstellposition angeordnet ist. Die Ausstellposition ist in den Figuren 17 bis 19 gezeigt, wobei in der Ausstellposition die Klappe 4 in einem größeren Abstand zu dem Betätigungshebel 12 angeordnet ist als in der in Figur 16 gezeigten Schließposition. In der Ausstellposition der Klappe 4 liegt infolge der Kraft des Federelements 24 der Bewegungsansatz 23 an dem Ausstellabschnitt 39 an, so dass der Bewegungsansatz 23 die Klappe 4 in die Ausstellposition drückt.

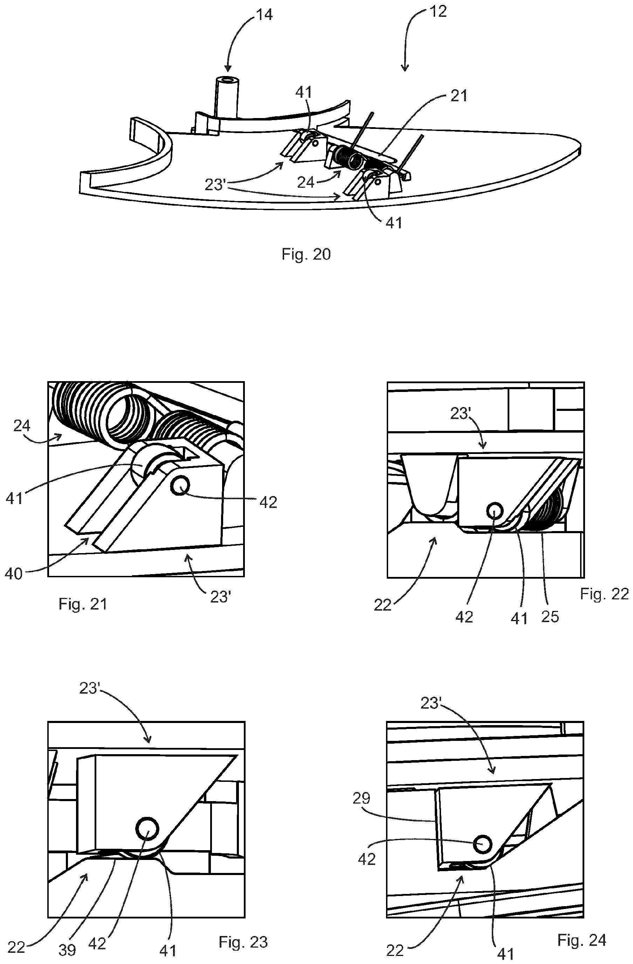

Die Figuren 20 bis 24 zeigen eine besondere Ausgestaltung der Bewegungsansätze 23' des Betätigungshebels 12. Wie die Figuren 20 und 21 zeigen, weisen die Bewegungsansätze 23' gemäß dieser besonderen Ausgestaltung jeweils eine zentrale Ausnehmung 40 auf. Die schlitzförmigen Ausnehmungen 40 der beiden Bewegungsansätze 23' sind derart dimensioniert, dass die jeweilige schlitzförmige Ausnehmung 40 ein Rollenelement 41 aufnimmt, welches an dem entsprechenden Bewegungsansatz 23' über eine Lagerachse 42 drehbar gelagert ist. Das jeweilige Rollenelement 41 ragt derart abschnittsmäßig aus der Ausnehmung 40 hervor, dass der jeweilige Bewegungsansatz 23' über das Rollenelement 41 an der Bewegungskontur 22 der Klappe 4 anliegt. Die Rollenelemente 41 reduzieren den Reibungswiderstand und unerwünschte Geräusche, wenn sich die Bewegungsansätze 23' zu den korrespondierenden Bewegungskonturen 22 der Klappe 4 relativ bewegen. In den Figuren 22 bis 24 sind verschiedene Anordnungen von einem der beiden Rollenelemente 41 an der Bewegungskontur 22 gezeigt. In Figur 22 ist die Klappe 4 in ihrer Schließposition angeordnet, wobei der gezeigte Bewegungsansatz 23' über das Rollenelement 41 an dem Neutralabschnitt 25 der Bewegungskontur 22 anliegt. In Figur 23 ist die Klappe 4 in ihrer Ausstellposition angeordnet, wobei hierbei der Bewegungsansatz 23' über das Rollenelement 41 dann an dem Ausstellabschnitt 39 der Bewegungskontur 22 anliegt. Schließlich ist in Figur 24 die Klappe 4 in ihrer Öffnungsposition angeordnet. In der Öffnungsposition der Klappe 4 liegt der Bewegungsansatz 23' an der Antriebsflanke 29 an.

Alternativ zu der vorstehend beschriebenen Bewegungsmechanik kann für ein davon abweichendes Ausführungsbeispiel eines Kraftfahrzeug-Klappen-Systems eine Kulissenführung an der Klappe 4 ausgebildet sein, in welcher ein an dem Betätigungshebel 12 ausgebildeter Bewegungszapfen angeordnet ist, welcher die Klappe 4 aus der Schließposition in die Öffnungsposition drängend ausgebildet ist. Dabei kann die Kulissenführung eine Bewegung der Klappe 4 in eine zu dem Betätigungshebel 12 hin und von dem Betätigungshebel 12 weg gerichtete Richtung führend ausgebildet sein. Auf diese Weise wäre die Klappe 4 zwangsgeführt und dauerhaft mit dem Betätigungshebel 12 gekoppelt, wobei aber auf ein Federelement verzichtet werden kann, um die Klappe 4 aus der Durchgangsöffnung 3 heraus zu bewegen.

Die vorstehend beschriebene Erfindung ist selbstverständlich nicht auf die beschriebene und dargestellte Ausführungsform beschränkt. Es ist ersichtlich, dass an der in der Zeichnung dargestellten Ausführungsform zahlreiche, dem Fachmann entsprechend der beabsichtigten Anwendung naheliegende Abänderungen vorgenommen werden können, ohne dass dadurch der Bereich der Erfindung verlassen wird. Zur Erfindung gehört alles dasjenige, was in der Beschreibung enthalten und/oder in der Zeichnung dargestellt ist, einschließlich dessen, was abweichend von dem konkreten Ausführungsbeispiel für den Fachmann naheliegt.

## Patentansprüche

1. Kraftfahrzeug-Klappen-System (10), aufweisend eine Seitenwand (2) mit einer Innenseitenfläche (6), einer Außenseitenfläche (5) und einer Durchgangsöffnung (3), eine Klappe (4), welche zwischen einer die Durchgangsöffnung (3) verschließenden Schließposition, in welcher die Klappe (4) innerhalb der Durchgangsöffnung (3) liegend und strakbündig mit der Außenseitenfläche (5) verlaufend angeordnet ist, und einer die Durchgangsöffnung (3) freigebenden Öffnungsposition an der Innenseitenfläche (6) bewegbar gelagert ist, und einen Betätigungshebel (12), welcher zwischen einer Startstellung und einer Endstellung an der Innenseitenfläche (6) schwenkbar gelagert ist und welcher bei seiner Bewegung in die Endstellung die Klappe (4) in die Öffnungsposition bewegend ausgebildet ist, wobei die Klappe (4) und der Betätigungshebel (12) an einer an der Innenseitenfläche (6) angeordneten Führungsachse (14) schwenkbar gelagert sind,
**dadurch gekennzeichnet, dass**
an der Innenseitenfläche (6) eine Bewegungsführung (37) ausgebildet ist, in welcher ein an der Klappe (4) ausgebildeter Bewegungszapfen (38) geführt angeordnet ist.

2. Kraftfahrzeug-Klappen-System (10) nach Anspruch 1, wobei die Klappe (4) entlang der Führungsachse (14) in eine axiale Richtung (31) bewegbar gelagert ist.

3. Kraftfahrzeug-Klappen-System (10) nach Anspruch 2, wobei an dem Betätigungshebel (12) oder an der Klappe (4) ein Federelement (24) gelagert ist, welches eine die Klappe (4) in Richtung des Betätigungshebels (12) drängende Kraft auf die Klappe (4) ausübt.

4. Kraftfahrzeug-Klappen-System (10) nach Anspruch 3, wobei an der Klappe (4) eine Bewegungskontur (22) ausgebildet ist, die an einem an dem Betätigungshebel (12) ausgebildeten Bewegungsansatz (23, 23') anliegt.

5. Kraftfahrzeug-Klappen-System (10) nach Anspruch 4, wobei die Bewegungskontur (22) einen Neutralabschnitt (25), an welchem der Bewegungsansatz (23, 23 ') in seiner Startposition die Klappe (4) in ihre Schließposition drängend anliegt, und einen Eingriffsabschnitt (26), mit welchem der Bewegungsansatz (23, 23 ') bei der Bewegung des Betätigungshebels (12) in Richtung seiner Endstellung in Eingriff steht, aufweist.

6. Kraftfahrzeug-Klappen-System (10) nach Anspruch 5, wobei der Eingriffsabschnitt (26) eine von dem Neutralabschnitt (25) bis zu einem Fußpunkt (27) schräg verlaufende Einfahrflanke (28) und eine Antriebsflanke (29) umfasst, und wobei bei einer Bewegung des Betätigungshebels (12) in Richtung seiner Endstellung der Bewegungsansatz (23, 23') an der Antriebsflanke (29) die Klappe (4) in ihre Öffnungsstellung drängend ausgebildet ist.

7. Kraftfahrzeug-Klappen-System (10) nach Anspruch 6, wobei der Bewegungsansatz (23) eine komplementär zu der schräg verlaufenden Einfahrflanke (28) ausgebildete Eingriffsfläche (30) aufweist, die auf der schräg verlaufenden Einfahrflanke (28) des Eingriffsabschnitts (26) aufliegt, wenn der Eingriffsabschnitt (26) und der Bewegungsansatz (23) in Eingriff stehen.

8. Kraftfahrzeug-Klappen-System (10) nach einem der Ansprüche 4 bis 6, wobei der Bewegungsansatz (23') ein Rollenelement (41) drehbar lagert, und wobei der Bewegungsansatz (23') über das Rollenelement (41) an der Bewegungskontur (22) anliegt.

9. Kraftfahrzeug-Klappen-System (10) nach Anspruch 5, wobei der Betätigungshebel (12) und die Klappe (4) um die Führungsachse (14) gemeinsam schwenkbar ausgebildet sind, wenn der Eingriffsabschnitt (26) und der Bewegungsansatz (23, 23') in Eingriff stehen.

10. Kraftfahrzeug-Klappen-System (10) nach Anspruch 5, wobei bei einer Bewegung des Betätigungshebels (12) in Richtung seiner Endstellung das Federelement (24) eine den Eingriffsabschnitt (26) auf den Bewegungsansatz (23, 23') drängende Kraft ausübt.

11. Kraftfahrzeug-Klappen-System (10) nach Anspruch 5, **dadurch gekennzeichnet, dass** an der Innenseitenfläche (6) zwei Führungsstege (32, 33) ausgebildet sind, wobei die Klappe (4) einen Klappenhebel (34) aufweist, der mit einem ersten Längsende (35) an der Führungsachse (14) gelagert ist und der an einem zweiten Längsende (36) die Klappe (4) trägt, wobei der Klappenhebel (34) in der Schließstellung der Klappe (4) zwischen den zwei Führungsstegen (32, 33) liegend angeordnet ist und die zwei Führungsstege (32, 33) in Schließstellung der Klappe (4) eine Schwenkbewegung des Klappenhebels (34) um die Führungsachse (14) blockieren.

12. Kraftfahrzeug-Klappen-System (10) nach Anspruch 11, wobei der Klappenhebel (34) entlang der Führungsachse (14) in Richtung des Betätigungshebels (12) außerhalb der zwei Führungsstege (32, 33) liegend angeordnet ist, wenn der Eingriffsabschnitt (26) und der Bewegungsansatz (23, 23') in Eingriff stehen.

13. Kraftfahrzeug-Klappen-System (10) nach Anspruch 5, wobei die Bewegungskontur (22) zwischen dem Neutralabschnitt (25) und dem Eingriffsabschnitt (26) einen sich von dem Neutralabschnitt (25) erhebenden Ausstellabschnitt (39) aufweist, wobei die Klappe (4) in einer aus der Durchgangsöffnung (3) und aus der Außenseitenfläche (5) hervorstehenden Ausstellposition, in welcher die Klappe (4) in einem größeren Abstand zu dem Betätigungshebel (12) angeordnet ist als in der Schließposition, angeordnet ist, und wobei in der Ausstellposition der Klappe (4) der Bewegungsansatz (23, 23') an dem Ausstellabschnitt (39) die Klappe (4) in die Ausstellposition drängend anliegt.

14. Kraftfahrzeug-Klappen-System (10) nach Anspruch 1, wobei eine Kulissenführung an der Klappe (4) ausgebildet ist, in welcher ein an dem Betätigungshebel (12) ausgebildeter Bewegungszapfen angeordnet ist, welcher die Klappe (4) aus der Schließposition in die Öffnungsposition drängend ausgebildet ist, wobei die Kulissenführung eine Bewegung der Klappe (4) in eine zu dem Betätigungshebel (12) hin und von dem Betätigungshebel (12) weg gerichtete Richtung führend ausgebildet ist.

15. Kraftfahrzeug-Klappen-System (10) nach Anspruch 1, wobei ein Antriebselement (15) mit dem Betätigungshebel (12) antriebsverbunden ist und den Betätigungshebel (12) aus der Startstellung in die Endstellung und zurück in die Startstellung bewegend ausgebildet ist.

16. Kraftfahrzeug-Klappen-System (10) nach Anspruch 15, wobei das Antriebselement (15) einen Antriebshebel (17) mit einem Antriebszapfen (20) antreibt, wobei der Betätigungshebel (12) ein Langloch (21) aufweist, in welchem der Antriebszapfen (20) angeordnet ist, und wobei das Antriebselement (15) über den Antriebshebel (17) und den in dem Langloch (21) angeordneten Antriebszapfen (20) mit dem Betätigungshebel (12) antriebsverbunden ist.

## Claims

1. Motor vehicle flap system (10) having a side wall (2) with an inside surface (6), an outside surface (5) and a passthrough (3), a flap (4) which is mounted so as to be movable between a closing position that closes off the passthrough (3), in which the flap (4) is arranged lying inside the passthrough (3) and extends in strake-flush manner with the outside surface (5), and an opening position on the inside surface (6) which unblocks the passthrough (3), and an actuating lever (12) which is mounted on the inside surface (6) so as to be pivotable between a start position and an end position and which is designed so as to shift the flap (4) into the opening position when moving to its end position, wherein the flap (4) and the actuating lever (12) are mounted pivotably on a guide journal (14) arranged on the inside surface (6),
**characterized in that**
a movement guide (37) is conformed on the inside surface (6), in which a movement pin (38) conformed on the flap (4) is arranged and guided.

2. Motor vehicle flap system (10) according to Claim 1, wherein the flap (4) is mounted so as to be movable in an axial direction (31) along the guide journal (14).

3. Motor vehicle flap system (10) according to Claim 2, wherein a spring element (24) is mounted on the actuating lever (12) or on the flap (4) which spring element exerts a force on the flap (4) that pushes the flap (4) in the direction of the actuating lever (12).

4. Motor vehicle flap system (10) according to Claim 3, wherein a movement contour (22) is conformed on the flap (4), which contour abuts a movement extension (23, 23') conformed on the actuating lever (12).

5. Motor vehicle flap system (10) according to Claim 4, wherein the movement contour (22) has a neutral section (25), on which the movement extension (23, 23') in its starting position bears on the flap (4), pushing it into its closing position, and an engagement section (26), with which the movement extension (23, 23') engages when the actuating lever (12) is moved in the direction of its end position.

6. Motor vehicle flap system (10) according to Claim 5, wherein the engagement section (26) comprises a retraction flank (28) which slopes from the neutral section (25) as far as a foot point (27), and a driving flank (29), and wherein when the actuating lever (12) is moved towards its end position the movement extension (23, 23') on the driving flank (29) is designed to push the flap (4) into its opening position.

7. Motor vehicle flap system (10) according to Claim 6, wherein the movement extension (23) has an engagement surface (30) which is constructed to complement the sloping retraction flank (28), which surface bears on the sloping retraction flank (28) when the engagement section (26) and the movement extension (23) are engaged with each other.

8. Motor vehicle flap system (10) according to any one of Claims 4 to 6, wherein the movement extension (23') supports a roller element (41) rotatably, and wherein the movement extension (23') bears on the movement contour (22) via the roller element (41).

9. Motor vehicle flap system (10) according to Claim 5, wherein the actuating lever (12) and the flap (4) are designed to be able to pivot together about the guide journal (14) when the engagement section (26) and the movement extension (23, 23') are engaged.

10. Motor vehicle flap system (10) according to Claim 5, wherein when the actuating lever (12) is moved in the direction of its end position the spring element (24) exerts a force that urges the engagement section (26) onto the movement extension (23, 23').

11. Motor vehicle flap system (10) according to Claim 5, **characterized in that** two guide bars (32, 33) are conformed on the inside surface (6), wherein the flap (4) has a flap lever (34), of which a first longitudinal end (35) is mounted on the guide journal (14), and a second longitudinal end (36) supports the flap (4), wherein with the flap (4) in the closing position the flap lever (34) is arranged lying between the two guide bars (32, 33), and with the flap (4) in the closing position the two guide bars (32, 33) block a pivoting motion of the flap lever (34) about the guide journal (14) .

12. Motor vehicle flap system (10) according to Claim 11, wherein the flap lever (34) is arranged lying in the direction of the actuating lever (12) outside of the two guide bars (32, 33) along the guide journal (14) when the engagement section (26) and the movement extension (23, 23') are engaged.

13. Motor vehicle flap system (10) according to Claim 5, wherein the movement contour (22) has an extension section (39) which is raised above the neutral section (25) between the neutral section (25) and the engagement section (26), wherein the flap (4) is arranged in an extended position protruding out of the passthrough (3) and out of the outside surface (5), the flap (4) is arranged at a greater distance from the actuating lever (12) than in the closing position, and wherein in the extended position of the flap (4) the movement extension (23, 23') bears on the extension section (39), urging the flap (4) into the extended position.

14. Motor vehicle flap system (10) according to Claim 1, wherein a sliding guide is conformed on the flap (4), in which a movement pin conformed on the actuating lever (12) is arranged, and which is designed to push the flap (4) out of the closing position and into the opening position, wherein the sliding guide is designed to guide a movement of the flap (4) in a direction towards the actuating lever (12) and away from the actuating lever (12).

15. Motor vehicle flap system (10) according to Claim 1, wherein a drive element (15) is drivingly connected to the actuating lever (12) and is designed to move the actuating lever (12) out of the start position into the end position and back into the start position.

16. Motor vehicle flap system (10) according to Claim 15, wherein the drive element (15) drives a drive lever (17) with a drive journal (20), wherein the actuating lever (12) has an elongated hole (21) in which the drive journal (20) is arranged, and wherein the drive element (15) drivingly connected to the actuating lever (12) via the drive lever (17) and the drive journal (20) arranged in the elongated hole (21).

## Revendications

1. Système de clapet pour véhicule automobile (10) comportant une paroi latérale (2) avec une surface latérale intérieure (6), une surface latérale extérieure (5) et une ouverture de passage (3), un clapet (4), lequel est logé mobile sur la surface latérale intérieure (6) entre une position de fermeture fermant l'ouverture de passage (3, dans laquelle le clapet (4) est disposé à plat à l'intérieur de l'ouverture de passage (3) et passant à affleurement de la surface latérale extérieure (5) et une position d'ouverture libérant l'ouverture de passage (3) et un levier de commande (12), lequel est logé pouvant pivoter sur la surface latérale intérieure (6) entre une position initiale et une position finale, et lequel est constitué déplaçant le clapet (4) dans la position d'ouverture, lors de son déplacement dans la position finale, sachant que le clapet (4) et le levier de commande (12) sont logés pouvant pivoter sur un axe de guidage (14) disposé sur la surface latérale intérieure (6),
**caractérisé en ce qu'**
un guidage de déplacement (37) est constitué sur la surface latérale intérieure (6), dans lequel est disposé guidé un tourillon de déplacement (38) agencé sur le clapet (4).

2. Système de clapet pour véhicule automobile (10) selon la revendication 1, sachant que le clapet (4) est logé mobile dans une direction axiale (31) le long de l'axe de guidage (14).

3. Système de clapet pour véhicule automobile (10) selon la revendication 2, sachant qu'un élément faisant ressort (24) est logé sur le levier de commande (12) ou sur le clapet (4), lequel exerce sur le clapet (4) une force repoussant le clapet (4) en direction du levier de commande (12).

4. Système de clapet pour véhicule automobile (10) selon la revendication 3, sachant qu'un profil de déplacement (22) est constitué sur le clapet (4), qui vient s'appliquer à une saillie de déplacement (23, 23') constituée sur le levier de commande (12).

5. Système de clapet pour véhicule automobile (10) selon la revendication 4, sachant que le profil de déplacement (22) comporte une section neutre (25), à laquelle la saillie de déplacement (23, 23') s'applique dans sa position initiale repoussant le clapet (4) dans sa position de fermeture, et, une section d'engrènement (26), avec laquelle la saillie de déplacement (23, 23') vient en prise lors du déplacement du levier de commande (12) dans la direction de sa position finale.

6. Système de clapet pour véhicule automobile (10) selon la revendication 5, sachant que la section d'engrènement (26) comprend un flanc de positionnement (28) passant en diagonale de la section neutre (25) jusqu'à un point de base (27) et un flanc d'entraînement (29) et sachant que lors d'un déplacement du levier de commande (12) en direction de sa position finale, la saillie de déplacement (23, 23') sur le flanc d'entraînement (29) est constituée repoussant le clapet (4) dans sa position d'ouverture.

7. Système de clapet pour véhicule automobile (10) selon la revendication 6, sachant que la saillie de déplacement (23) comporte une surface d'engrènement (30) constituée de façon complémentaire au flanc de positionnement (28) passant en diagonale, qui repose sur le flanc de positionnement (28) de la section d'engrènement (26) passant en diagonale, lorsque la section d'engrènement (26) et la saillie de déplacement (23) sont en prise.

8. Système de clapet pour véhicule automobile (10) selon l'une quelconque des revendications 4 à 6, sachant que la saillie de déplacement (23') loge un élément à galet (41) pouvant tourner et sachant que la saillie de déplacement (23') s'applique au profil de déplacement (22) par le biais de l'élément à galet (41).

9. Système de clapet pour véhicule automobile (10) selon la revendication 5, sachant que le levier de commande (12) et le clapet (4) sont constitués pouvant pivoter en commun autour de l'axe de guidage (14), lorsque la section d'engrènement (26) et la saillie de déplacement (23, 23') sont en prise.

10. Système de clapet pour véhicule automobile (10) selon la revendication 5, sachant que lors d'un déplacement du levier de commande (12) en direction de sa position finale, l'élément faisant ressort (24) exerce une force repoussant la section d'engrènement (26) sur la saillie de déplacement (23, 23').

11. Système de clapet pour véhicule automobile (10) selon la revendication 5, **caractérisé en ce que** deux barrettes de guidage (32, 33) sont constituées sur la surface latérale intérieure (6), sachant que le clapet (4) comporte un levier de clapet (34), qui est logé avec une première extrémité longitudinale (35) sur l'axe de guidage (14) et qui supporte le clapet (4) à une deuxième extrémité longitudinale (36), sachant que le levier de clapet (34) dans la position de fermeture du clapet (4) est disposé à plat entre les deux barrettes de guidage (32, 33) et les deux barrettes de guidage (32, 33) en position de fermeture du clapet (4), bloquent un mouvement de pivotement du levier de clapet (34) autour de l'axe de guidage (14).

12. Système de clapet pour véhicule automobile (10) selon la revendication 11, sachant que le levier de clapet (34) est disposé à plat le long de l'axe de guidage (14) en direction du levier de commande (12) en dehors des deux barrettes de guidage (32, 33), lorsque la section d'engrènement (26) et la saillie de déplacement (23, 23') se trouvent en prise.

13. Système de clapet pour véhicule automobile (10) selon la revendication 5, sachant que le profil de déplacement (22) comporte une section de déploiement (39) se dressant depuis la section neutre (25) entre la section neutre (25) et la section d'engrènement (26) sachant que le clapet (4) est disposé dans une position de déploiement faisant saillie de l'ouverture de passage (3) et de la surface latérale extérieure (5), dans laquelle le clapet (4) est disposé à une distance du levier de commande (12) plus grande que dans la position de fermeture et sachant que dans la position de déploiement du clapet (4), la saillie de déplacement (23, 23') s'applique à la section de déploiement (39) repoussant le clapet (4) dans la position de déploiement.

14. Système de clapet pour véhicule automobile (10) selon la revendication 1, sachant qu'un guidage à coulisse est constitué sur le clapet (4), dans lequel est disposé un tourillon de déplacement constitué sur le levier de commande (12), lequel est constitué repoussant le clapet (4) de la position de fermeture à la position d'ouverture, sachant que le guidage à coulisse est constitué guidant un déplacement du clapet (4) dans une direction orientée vers le levier de commande (12) et s'éloignant du levier de commande (12) .

15. Système de clapet pour véhicule automobile (10) selon la revendication 1, sachant qu'un élément d'entraînement (15) est relié en entraînement au levier de commande (12) et est constitué de manière à déplacer le levier de commande (12) de la position initiale à la position finale et en retour à la position initiale.

16. Système de clapet pour véhicule automobile (10) selon la revendication 15, sachant que l'élément d'entraînement (15) entraîne un levier d'entraînement (17) avec un tourillon d'entraînement (20), sachant que le levier de commande (12) comporte un trou oblong (21), dans lequel est disposé le tourillon d'entraînement (20), et sachant que l'élément d'entraînement (15) est relié en entraînement au levier de commande (12) par le biais du levier d'entraînement (17) et du tourillon d'entraînement (20) disposé dans le trou oblong (21).
